# EUROPÄISCHE PATENTSCHRIFT

(11) **EP 2 106 865 B1**
(45) Veröffentlichungstag und Bekanntmachung des Hinweises auf die Patenterteilung: **06.07.2011**
(21) Anmeldenummer: 08006792.9
(22) Anmeldetag: 03.04.2008
(51) Int. Cl.: B21D 43/00, B21D 43/04, B21D 43/12, B21D 43/10

(54) **Maschinelle Anordnung für die Blechbearbeitung sowie Beschickungseinrichtung für eine derartige maschinelle Anordnung**
Machine assembly for sheet metal forming with a sheet metal forming unit and feeding device for such a machine assembly
Sytème mécanique pour le formage des tôles et dispositif d'alimentation pour un tel système mécanique

(43) Veröffentlichungstag der Anmeldung: 07.10.2009
(73) Patentinhaber: Trumpf Sachsen GmbH, 01904 Neukirch (DE)
(72) Erfinder: Vogel, Klaus, 02681 Kirschau OT Rodewitz (DE)
(74) Vertreter: Kohler Schmid Möbus

(56) Entgegenhaltungen:
- EP-A- 1 935 526
- GB-A- 2 264 664
- US-A1- 2003 147 729
- US-A1- 2005 072 768
- US-B1- 6 413 035

## Beschreibung

Die Erfindung betrifft eine Beschickungseinrichtung für eine maschinelle Anordnung für die Blechbearbeitung welche eine Blechbearbeitungsmaschine aufweist, an welcher ein auf einer Arbeitspalette angeordnetes Blechwerkstück bearbeitbar ist,
● mit einem Lager für Lagerpaletten, mit mehreren Lagerplätzen sowie
● mit einer Umschlagvorrichtung für den Transfer eines zu bearbeitenden Blechwerkstückes von einer als Vorratspalette vorgesehenen Lagerpalette zu einer Arbeitspalette, welche der Blechbearbeitungsmaschine zugeführt wird sowie für den Transfer eines Bearbeitungsproduktes der Blechbearbeitung von einer von der Blechbearbeitungsmaschine abgeführten Arbeitspalette zu einer als Sammelpalette vorgesehenen Lagerpalette,
● wobei die Umschlagvorrichtung umfasst:
   o ein Zwischenlager mit mehreren Zwischenlagerplätzen für Arbeitspaletten, welche der Blechbearbeitungsmaschine zuzuführen sind sowie für Arbeitspaletten, welche von der Blechbearbeitungsmaschine abgeführt worden sind,
   o eine Beladeeinrichtung zum Transfer von zu bearbeitenden Blechwerkstücken von einer Vorratspalette zu einer der Blechbearbeitungsmaschine zuzuführenden Arbeitspalette, wobei die Beladeeinrichtung in Funktionsstellungen in Form einer Aufnahmeposition sowie einer Übergabeposition bewegbar ist und zu bearbeitende Blechwerkstücke bei Aufnahmeposition der Beladeeinrichtung von einer Vorratspalette aufnehmbar und bei Übergabeposition der Beladeeinrichtung an eine Arbeitspalette übergebbar sind,
   o eine Entladeeinrichtung zum Transfer von Bearbeitungsprodukten der Blechbearbeitung von einer von der Blechbearbeitungsmaschine abgeführten Arbeitspalette zu einer Sammelpalette,
● wobei das Zwischenlager als höhenverstellbarer Palettenlift ausgebildet ist, mit wenigstens zwei übereinander angeordneten Zwischenlagerplätzen.

Die Erfindung betrifft des Weiteren eine maschinelle Anordnung für die Blechbearbeitung mit einer Beschickungseinrichtung der vorstehenden Art.

Eine derartige Anordnung wird von der Firma TRUMPF^{®} Werkzeugmaschinen GmbH + Co. KG, 71254 Ditzingen, Deutschland angeboten. Im Falle des Standes der Technik werden einer zur Blechbearbeitung eingesetzten Laserschneidmaschine Arbeitspaletten mit darauf abgelegten Rohblechen zugeführt. Nach der Werkstückbearbeitung werden die Arbeitspaletten mit den darauf gelagerten Bearbeitungsprodukten aus dem Arbeitsbereich der Laserschneidmaschine herausbewegt. Als Zwischenlager zwischen der Laserschneidmaschinen und einem Lager ist ein Palettenwechsler vorgesehen, der zwei übereinander angeordnete Palettenführungen für Arbeitspaletten aufweist. Die Palettenführungen des Palettenwechslers können angehoben und abgesenkt werden. Dadurch lässt sich jede der Palettenführungen in eine Position bewegen, in welcher sie in horizontaler Richtung mit einer Palettenführung in dem Arbeitsbereich der Laserschneidmaschine fluchtet. Oberhalb des Palettenwechslers ist eine heb- und senkbare Be-und Entladeeinrichtung vorgesehen. An dem Lager ist ein gleichfalls mit einer Palettenführung versehener Zwischenlader in vertikaler Richtung verfahrbar. Zu bearbeitende Rohbleche sind auf Vorratspaletten gestapelt und gemeinsam mit diesen an Lagerplätzen des Lagers eingelagert.

Soll die Laserschneidmaschine mit einem zu bearbeitenden Rohblech beschickt werden, so verfährt zunächst der Zwischenlader an dem Lager in vertikaler Richtung in eine Position, in welcher er sich vor demjenigen Lagerplatz befindet, an welchem das zu bearbeitende Rohblech eingelagert ist. Anschließend wird die Vorratspalette mit dem zu bearbeitenden Rohblech aus dem Lagerplatz auf den Zwischenlader bewegt. Dort ist das zu bearbeitende Rohblech für die Be- und Entladeeinrichtung zugänglich, welche das zu bearbeitende Rohblech von der Vorratspalette abhebt. Anschließend wird die Vorratspalette in das Lager zurückbewegt und die Be- und Entladeeinrichtung senkt sich mit dem daran gehaltenen Rohblech ab und legt das Rohblech auf eine leere Arbeitspalette auf, die sich an dem Palettenwechsler in einer Wartestellung befindet. Gleichzeitig wird in dem Arbeitsbereich der Laserschneidmaschine ein gleichfalls auf einer Arbeitspalette aufliegendes Rohblech bearbeitet.

Nach Abschluss der Blechbearbeitung wird die Arbeitspalette mit dem Bearbeitungsprodukt, beispielsweise einem Restgitter, aus dem Arbeitsbereich der Laserschneidmaschine zu dem Palettenwechsler bewegt. Die zuvor mit dem zu bearbeitenden Rohblech beladene Arbeitspalette fährt in den Arbeitsbereich der Laserschneidmaschine ein. Mittels der Be- und Entladeeinrichtung wird das Bearbeitungsprodukt von der zuvor aus dem Arbeitsbereich der Laserschneidmaschine ausgefahrenen Arbeitspalette entladen. Dabei wird das Bearbeitungsprodukt von der Be- und Entladeeinrichtung aufgenommen. Anschließend wird das Bearbeitungsprodukt durch vertikales Verfahren der Be- und Entladeeinrichtung in eine Position überführt, in welcher das Bearbeitungsprodukt oberhalb desjenigen Lagerplatzes an dem Lager angeordnet ist, an welchem es eingelagert werden soll. Zum Einlagern ist das Bearbeitungsprodukt auf einer in dem Lager eingelagerten Sammelpalette abzulegen. Zu diesem Zweck verfährt der Zwischenlader an dem Lager auf Höhe des betreffenden Lagerplatzes. Anschließend wird die zu beladende Sammelpalette aus dem Lagerplatz auf den Zwischenlader gezogen. Nun kann die oberhalb des Lagerplatzes wartende Be- und Entladeeinrichtung abgesenkt und dadurch das Bearbeitungsprodukt auf der Sammelpalette abgelegt werden. Abschließend wird die Sammelpalette mit dem darauf abgelegten Bearbeitungsprodukt zurück in das Lager bewegt.

Stand der Technik gemäß Artikel 54(3) EPÜ ist der Inhalt der unter der Nummer EP 1 935 526 A1 veröffentlichlichten europäischen Patentanmeldung. Diese europäische Patentanmeldung betrifft eine maschinelle Anordnung für die Blechbearbeitung mit einer Beschickungseinrichtung, die zusätzlich zu den eingangs genannten Merkmalen eine Beladeeinrichtung aufweist, die ihrerseits von der Entladeeinrichtung entkoppelt in eine Aufnahmeposition bewegbar ist, in welcher durch die Beladeeinrichtung zu bearbeitende Blechwerkstücke von einer an einem Lagerplatz des Lagers angeordneten Vorratspalette aufnehmbar sind.

Weiterer Stand der Technik ist bekannt aus US 2003/0147729 A1. Diese Druckschrift offenbart eine Werkzeugmaschine für die Blechbearbeitung sowie eine zugehörige Be- und Entladevorrichtung. Die neben der Werkzeugmaschine aufgestellte Be- und Entladevorrichtung weist einen horizontal beweglichen Greifer sowie eine heb- und senkbare Plattform auf, an deren Unterseite ein Saugerrahmen mit Saugern angebracht ist. Zum Aufnehmen eines zu bearbeitenden Bleches wird der Saugerrahmen durch Absenken der Plattform mit den Saugern auf einem Blech aufgesetzt, das unterhalb der Be- und Entladevorrichtung auf einer stationären Palette gelagert ist. Nach dem Ansaugen des zu bearbeitenden Bleches durch die Sauger wird das Blech durch eine Aufwärtsbewegung der Palette und des Saugerrahmens auf ein Niveau oberhalb einer Werkstückauflage der Werkzeugmaschine angehoben. Anschließend bewegt sich die Werkstückauflage unter das an dem Saugerrahmen gehaltene Blech und das Blech wird auf der Werkstückauflage abgelegt. Zum Bearbeiten verfährt die Werkstückauflage mit dem darauf gelagerten Blech zu einer Bearbeitungsstation der Werkzeugmaschine. Während der Blechbearbeitung wird die Baueinheit aus Plattform und Saugerrahmen unter das Niveau der Werkstückauflage abgesenkt. Ist die Blechbearbeitung beendet, so bewegt sich die Werkstückauflage in eine Position, in welcher der Greifer der Be- und Entladevorrichtung unter horizontalem Verfahren das bearbeitete Blech auf der Werkstückauflage erfassen kann. Anschließend wird die Werkstückauflage unter dem Blech, das mittels des Greifers fixiert ist, herausgezogen. Infolgedessen kommt das bearbeitete Blech unter Schwerkraftwirkung auf der Oberseite der Plattform der Be- und Entladevorrichtung zu liegen. Von dort wird das bearbeitete Blech schließlich abgeführt.

Ausgehend von dem eingangs beschriebenen Stand der Technik hat sich die vorliegende Erfindung eine zeitliche Optimierung des Werkstückwechsels an der Blechbearbeitungsmaschine und eine daraus resultierende Erhöhung der Produktivität der Blechbearbeitung zum Ziel gesetzt.

Erfindungsgemäß gelöst wird diese Aufgabe durch die Beschickungseinrichtung gemäß Patentanspruch 1 sowie durch die maschinelle Anordnung gemäß Patentanspruch 10.

Gemäß Patentanspruch 1 ist die Beladeeinrichtung von der Entladeeinrichtung entkoppelt in eine Funktionsstellung, d.h. in eine Aufnahmeposition und/oder in eine Übergabeposition, bewegbar. Dabei lässt sich die Beladeeinrichtung in eine Aufnahmeposition überführen, in welcher sie ein zu bearbeitendes Blechwerkstück unmittelbar an einem Lagerplatz des Lagers aufnehmen kann. Aufgrund der Möglichkeit, Beladeeinrichtung und Entladeeinrichtung räumlich voneinander zu trennen, wird eine räumlich Konzentration von Be- und Entladevorgängen vermieden. Beispielsweise besteht die Möglichkeit, die Aufnahme eines unbearbeiteten Blechwerkstückes von einer Vorratspalette und das Beladen einer Arbeitspalette mit diesem Blechwerkstück einerseits sowie das Entladen einer Arbeitspalette von Bearbeitungsprodukten und das Ablegen der Bearbeitungsprodukte auf einer Sammelpalette andererseits zeitlich zu parallelisieren. Es kann vermieden werden, dass sich mittels der Beladeeinrichtung realisierte Abläufe und mittels der Entladeeinrichtung realisierte Abläufe gegenseitig behindern bzw. blockieren. Von besonderem Vorteil ist es, dass der häufig zeitintensive Prozess der Aufnahme von Rohblechen unmittelbar an einem Lagerplatz des Lagers durchgeführt werden kann. Es erübrigt sich dadurch insbesondere der Einsatz eines Zwischenladers, wie er im Falle des eingangs gewürdigten Standes der Technik vorgesehen ist. Die betreffende Vorratspalette kann an ihrem Lagerplatz verbleiben. Die zum Beladen einer Arbeitspalette mit einem zu bearbeitenden Blechwerkstück erforderlichen Teilprozesse reduzieren sich hinsichtlich ihres Umfanges und folglich auch zeitlich auf ein Minimum. Entsprechendes gilt für den Werkstückwechsel insgesamt.

Der das Zwischenlager ausbildende Palettenlift kann als üblicher, der Blechbearbeitungsmaschine unmittelbar benachbarter Palettenwechsler dienen. Zum andern können mittels des Palettenliftes Arbeits- und Lagerpaletten in der jeweils zweckmäßigen Art und Weise dem Lager, beispielsweise den verschiedenen Lagerebenen des Lagers, räumlich zugeordnet werden. Diese Doppelfunktion des Palettenliftes minimiert den mit der Gestaltung erfindungsgemäßer Anordnungen verbundenen konstruktiven Aufwand und bedingt durch eine Verkürzung der Transportwege eine Minimierung des Zeitbedarfs für den Werkstückwechsel an der Bearbeitungsmaschine. Im Zusammenwirken mit dem Lager kann der Palettenlift gewährleisten, dass beim Werkstückwechsel eine der Blechbearbeitungsmaschine zuzuführende und mit einem zu bearbeitenden Blechwerkstück beladene Arbeitspalette stets oberhalb der aus dem Arbeitsbereich der Blechbearbeitungsmaschine abzuführenden und mit Bearbeitungsprodukten beladenen Arbeitspalette angeordnet ist. Ein Überfahren zu bearbeitender Blechwerkstücke mit Bearbeitungsprodukten und eine damit möglicherweise verbundene Verschmutzung der zu bearbeitenden Blechwerkstücke kann auf diese Art und Weise vermieden werden.

Die Beladeeinrichtung kann wechselweise an dem Lager und an dem Zwischenlager positioniert werden. Die zu diesem Zweck erforderliche gegenseitige Zuordnung der lagerseitigen sowie der zwischenlagerseitigen Führung für die Beladeeinrichtung lässt sich auf besonders vorteilhafte Art und Weise deshalb realisieren, weil das Zwischenlager als höhenverstellbarer Palettenlift ausgebildet ist.

Da das Lager und das Zwischenlager Führungen für die Beladeeinrichtung aufweisen, ist die Beladeeinrichtung platzsparend und mit einem geringen technischen Aufwand in das Lager sowie in das Zwischenlager der Umschlagvorrichtung integriert.

Besondere Ausführungsarten der Erfindung nach den Patentansprüchen 1 und 10 ergeben sich aus den abhängigen Patentansprüchen 2 bis 9.

Gemäß Patentanspruch 2 ist in vorteilhafter Weiterbildung der Erfindung die Entladeeinrichtung der Umschlagvorrichtung an dem Zwischenlager angeordnet. Sammelpaletten werden der Entladeeinrichtung mittels der anspruchsgemäßen Überführungsmittel zugeführt. Technische Einrichtungen zur Bewegung der Entladeeinrichtung in eine von dem Zwischenlager abliegende Position erübrigen sich. Dementsprechend lassen sich die funktionale sowie die räumliche Trennung von Beladeeinrichtung und Entladeeinrichtung der Umschlagvorrichtung mit technisch einfachen und folglich auch kostengünstigen Mitteln realisieren. Erfindungsgemäß besteht insbesondere die Möglichkeit, die Entladeeinrichtung oberhalb des Zwischenlagers anzuordnen. In diesem Fall muss ein Entladeorgan der Entladeeinrichtung lediglich eine Vertikalbewegung ausführen, um auf eine unmittelbar darunter angeordnete Arbeits- oder Lagerpalette zugreifen zu können.

Ausweislich Patentanspruch 3 ist die Entladeeinrichtung im Falle einer weiteren Erfindungsbauart dem Lager zugeordnet. Ein Überführungsmittel sorgt in diesem Fall für die Zufuhr von Arbeitspaletten zu der Entladeeinrichtung. Zur Gewährleistung der funktionalen und räumlichen Trennung sind die Beladeeinrichtung und die Entladeeinrichtung an dem Lager räumlich voneinander getrennt, beispielsweise unterschiedlichen Lagerebenen zugeordnet. Auch im Falle der Erfindungsbauart nach Patentanspruch 3 erübrigen sich technisch aufwändige Einrichtungen zur Bewegung der Entladeeinrichtung. In diesem Fall bleibt der Raum außerhalb des Lagers und auch der Raum oberhalb des Zwischenlagers für sonstige Anordnungskomponenten frei. Beispielsweise kann in diesem Bereich eine Einrichtung vorgesehen sein, mittels derer Lagerpaletten dem Zwischenlager aus einem von dem Lager verschiedenen Palettenspeicher zugeführt werden.

Mit dem Verzicht auf eine Bewegung der Entladeeinrichtung in eine von dem Zwischenlager abliegende Position (Patentanspruch 2) bzw. in eine von dem Lager abliegende Position (Patentanspruch 3) ist eine erhebliche Zeitersparnis verbunden.

Gemäß Patentanspruch 4 sind das Lager und das Zwischenlager mit Palettenführungen für Lager- und/oder Arbeitspaletten versehen. Die beiderseitigen Palettenführungen können einander derart zugeordnet werden, dass Lager-und/oder Arbeitspaletten auf einfache Art und Weise zwischen dem Lager und dem Zwischenlager bewegt werden können.

Im Falle der Erfindungsbauart nach Patentanspruch 5 können lager-und/oder zwischenlagerseitige Führungen für Paletten gleichzeitig als Führungen für die Beladeeinrichtung eingesetzt werden und umgekehrt. Diese Maßnahme bedingt eine einfache konstruktive Gestaltung der Gesamtanordnung. Paletten und Beladeeinrichtung sind dessen ungeachtet flexibel dem Lager und/oder dem Zwischenlager zuordenbar.

Entsprechende Vorteile bewirkt das Erfindungsmerkmal nach Patentan-spruch 6, wonach die zur Bewegung der Beladeeinrichtung genutzten Führungsmittel mit den zur Bewegung von Lager- und/oder von Arbeitspaletten genutzten Führungsmitteln identisch sind. Denkbar sind gleichartige Fahrrahmen für die Beladeeinrichtung und für Lager- bzw. für Arbeitspaletten.

Eine voneinander unabhängige Bewegung der Beladeeinrichtung und/oder von Lagerpaletten und/oder von Arbeitspaletten ist gemäß Patentanspruch 7 möglich. Zu diesem Zweck eingesetzt wird wenigstens eine in das Zwischenlager integrierte Antriebseinrichtung. Ein als Antriebseinrichtung in Frage kommender Kettentrieb zeichnet sich durch eine besonders hohe Funktionssicherheit aus.

In weiterer bevorzugter Ausgestaltung der Erfindung besitzen zwischenlagerseitige Führungen für Paletten und/oder für die Beladeeinrichtung einerseits und lagerseitige Führungen für Paletten und/oder für die Bela-deeinrichtung andererseits identische Abstände (Patentanspruch 8). Aufgrund dieses Erfindungsmerkmales ist sichergestellt, dass bei unterschiedlicher gegenseitiger Höheneinstellung von Zwischenlager und Lager stets mehrere lagerseitige Führungen einerseits und mehrere zwischenlagerseitige Führungen andererseits einander zugeordnet sind.

In Weiterbildung der Erfindung ist die Beladeeinrichtung mit einer Lagerpalette verbunden und an deren Unterseite angebracht (Patentanspruch 9). In diesem Fall wird die Beladeeinrichtung von der Lagerpalette hu-ckepack mitgeführt. Die Lagerpalette übernimmt in diesem Fall eine Doppelfunktion. Befindet sich die betreffende Lagerpalette beispielsweise im Zwischenlager und wird sie dort mit von der Blechbearbeitungsmaschine abgeführten Bearbeitungsprodukten beladen, so kann gleichzeitig die Beladeeinrichtung an der Unterseite der Lagerpalette ein zuvor aufgenommenes unbearbeitetes Blechwerkstück auf einer der Blechbearbeitungsmaschine zuzuführenden Arbeitspalette ablegen. Auf diese Art und Weise können Teilabläufe des Werkstückwechsels zeitlich parallelisiert und dadurch der Zeitbedarf für den Werkstückwechsel insgesamt auf ein Minimum reduziert werden.

Nachstehend wird die Erfindung anhand schematischer Darstellungen von zwei Ausführungsbeispielen näher erläutert. Es zeigen:
- Figuren 1 bis 14: eine erste Bauart einer maschinellen Anordnung für die Blechbearbeitung in den einzelnen Verlaufs- phasen eines Werkstückwechsels,
- Figuren 15 bis 28: eine zweite Bauart einer maschinellen Anordnung für die Blechbearbeitung in den einzelnen Verlaufs- phasen eines Werkstückwechsels.

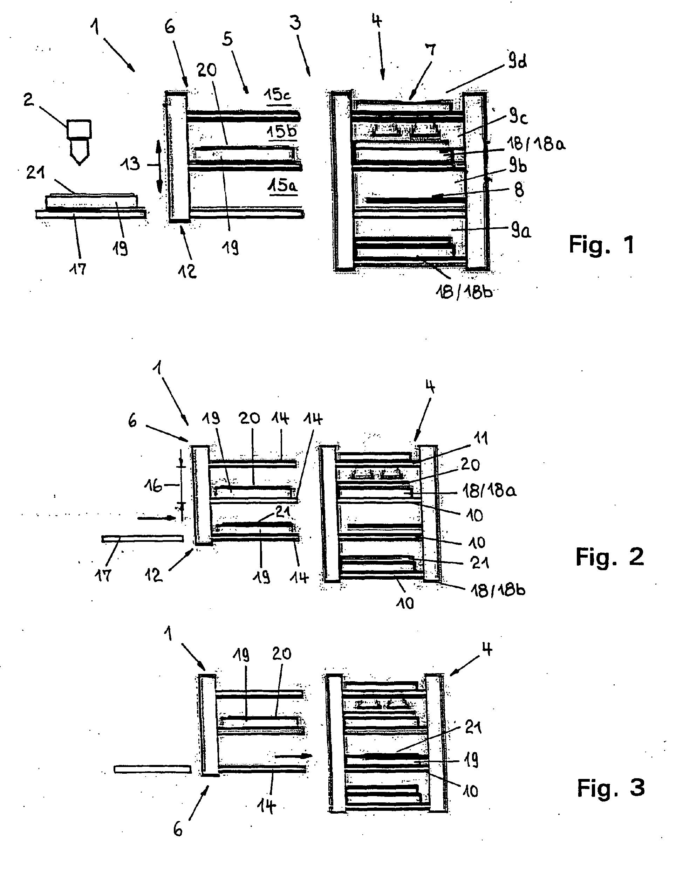

Gemäß den Figuren 1 bis 14 umfasst eine maschinelle Anordnung 1 für die Blechbearbeitung eine andeutungsweise dargestellte und der Einfachheit halber nur in Figur 1 gezeigte Blechbearbeitungsmaschine 2 sowie eine für die Blechbearbeitungsmaschine 2 vorgesehene Beschickungseinrichtung 3. Bei der Blechbearbeitungsmaschine 2 handelt es sich in dem gezeigten Beispielsfall um eine Laserschneidmaschine. Die Beschickungseinrichtung 3 umfasst ein als Regallager ausgebildetes Lager 4 sowie eine Umschlagvorrichtung 5, die ihrerseits zwischen der Blechbearbeitungsmaschine 2 und dem Lager 4 angeordnet ist. Wesentliche Bestandteile der Umschlagvorrichtung 5 sind ein Zwischenlager in Form eines Palettenliftes 6, eine als Belademodul 7 ausgeführte Beladeeinrichtung sowie eine von einem Entlademodul 8 gebildete Entladeeinrichtung. Das Belademodul 7 umfasst einen verfahrbaren Saugerrahmen üblicher Bauart. Das Entlademodul 8 ist mit einem herkömmlichen Entnahmerechen ausgestattet.

Das Lager 4 weist übereinander angeordnete Lagerplätze 9a, 9b, 9c, 9d mit lagerseitigen Führungen auf. Von diesen Führungen dienen drei als lagerseitige Palettenführungen 10 und eine weitere als Modulführung 11 für die Beladeeinrichtung, d.h. für das Belademodul 7. An dem Lagerplatz 9b des Lagers 4 ist das Entlademodul 8 installiert. Die Lagerplätze 9a, 9b, 9c, 9d sowie die lagerseitigen Palettenführungen 10 und die Modulführung 11 sind ortsunveränderlich.

Hiervon abweichend weist der Palettenlift 6 einen in Richtung eines Doppelpfeils 13 höhenverstellbaren Liftrahmen 12 mit zwischenlagerseitigen Palettenführungen 14 auf. Die zwischenlagerseitigen Palettenführungen 14 definieren übereinander angeordnete Zwischenlagerplätze 15a, 15b, 15c. Die lagerseitigen Palettenführungen 10 sowie die zwischenlagerseitigen Palettenführungen 14 und auch die Modulführung 11 für das Belademodul 7 sind baugleich und umfassen jeweils zwei senkrecht zu der Zeichenebene von Figur 1 voneinander beabstandete Führungsschienen. Der vertikale Abstand zwischen einander benachbarten lagerseitigen Palettenführungen 10, der vertikale Abstand zwischen der oberen lagerseitigen Palettenführung 10 und der Modulführung 11 sowie der vertikale Abstand zwischen einander benachbarten zwischenlagerseitigen Palettenführungen 14 stimmen miteinander überein. Ein einheitliches Abstandsmaß 16 ist in Figur 2 angedeutet.

Eine weitere Palettenführung 17 ist an der Blechbearbeitungsmaschine 2 vorgesehen. Die Palettenführung 17 ist baugleich mit den lagerseitigen Palettenführungen10, den zwischenlagerseitigen Palettenführungen 14 und der Modulführung 11. Ebenso wie die lagerseitigen Palettenführungen 10 ist die Palettenführung 17 an der Blechbearbeitungsmaschine 2 ortsunveränderlich.

Die Umschlagvorrichtung 5 dient dazu, Blechwerkstücke zwischen Lagerpaletten 18 und Arbeitspaletten 19 zu transferieren. Je nach Lagergut ist eine Lagerpalette 18 als Vorratspalette 18a oder als Sammelpalette 18b vorgesehen. Auf einer Vorratspalette 18a sind zu bearbeitende Blechwerkstücke, sogenannte Rohbleche 20, abgelegt. Eine Sammelpalette 18b lagert Bearbeitungsprodukte 21 der Blechbearbeitung. Dabei handelt es sich im gezeigten Beispielsfall um Restgitter, die nach der Blechbearbeitung und dem Ausschleusen der freigeschnittenen Fertigteile verbleiben.

Arbeitspaletten 19 werden mit einem darauf abgelegten Rohblech 20 der Blechbearbeitungsmaschine 2 zugeführt und im Anschluss an die Blechbearbeitung gemeinsam mit dem Bearbeitungsprodukt 21 von der Blechbearbeitungsmaschine 2 abgeführt. Nicht im Einzelnen dargestellte Führungsmittel an den Lagerpaletten 18 sowie an den Arbeitspaletten 19 sind baugleich und gestatten es, die Lagerpaletten 18 und die Arbeitspaletten 19 jeweils sowohl entlang der lagerseitigen Palettenführungen 10 als auch entlang der zwischenlagerseitigen Palettenführungen 14 zu bewegen. Entsprechende Führungsmittel sind an dem Belademodul 7 vorgesehen. Als Führungsmittel an den Lagerpaletten 18, den Arbeitspaletten 19 und dem Belademodul 7 kommen in erster Linie Führungsrollen bekannter Bauart in Frage. Die lagerseitigen Palettenführungen 10, die zwischenlagerseitigen Palettenführungen 14 und die Modulführung 11 sind dementsprechend vorzugsweise als Führungsschienen ausgebildet, auf denen die genannten Führungsrollen bei Bewegungen der Lagerpaletten 18, der Arbeitspaletten 19 sowie des Belademoduls 7 geführt abrollen können.

Ein möglicher Ablauf eines Werkstückwechsels an der maschinellen Anordnung 1 ergibt sich anhand der Figuren 1 bis 14. Hiervon abweichende Abläufe sind denkbar. Alle wesentlichen Vorgänge werden numerisch gesteuert.

**Figur 1**: Der Liftrahmen 12 des Palettenliftes 6 mit den zwischenlagerseitigen Palettenführungen 14 ist angehoben. Die Palettenführung 17 an der Blechbearbeitungsmaschine 2, die untere zwischenlagerseitige Palettenführung 14 sowie die mittlere lagerseitige Palettenführung 10 verlaufen in gegenseitiger horizontaler Verlängerung. In entsprechender Weise fluchten die mittlere zwischenlagerseitige Palettenführung 14 und die obere lagerseitige Palettenführung 10 und außerdem auch die obere zwischenlagerseitige Palettenführung 14 und die Modulführung 11 des Lagers 4 miteinander. Eine mit einem Rohblech 20 beladene Arbeitspalette 19 ist an der mittleren zwischenlagerseitigen Palettenführung 14 gelagert und befindet sich dort in einer Wartestellung. Das Belademodul 7 an der Modulführung 11 des Lagers 4 nimmt seine Aufnahmeposition oberhalb einer mit Rohblechen 20 beladenen Vorratspalette 18a ein. Eine Sammelpalette 18b ist an der unteren lagerseitigen Palettenführung 10 angeordnet. Das Entlademodul 8 bzw. dessen höhenbeweglicher Entladerechen ist an dem Lagerplatz 9b des Lagers 4 in eine abgesenkte Stellung bewegt. Eine Arbeitspalette 19 mit einem Bearbeitungsprodukt 21 ist an der Palettenführung 17 der Blechbearbeitungsmaschine 2 bereit zur Abfuhr aus dem Arbeitsbereich der Blechbearbeitungsmaschine 2.

**Figur 2**: Bei nach wie vor angehobenem Liftrahmen 12 wird die mit dem Bearbeitungsprodukt 21 beladene Arbeitspalette 19 aus dem Arbeitsbereich der Blechbearbeitungsmaschine 2 auf die untere zwischenlagerseitige Palettenführung 14 des Palettenliftes 6 aufgeschoben. Diese Bewegung wird mittels eines nicht gezeigten herkömmlichen Kettentriebes an der Palettenführung 17 ausgeführt. An dem Palettenlift 6 liegt die Arbeitspalette 19 mit dem Rohblech 20 vorteilhafterweise oberhalb der Arbeitspalette 19 mit dem Bearbeitungsprodukt 21. Eine Verschmutzung des Rohblechs 20, wie sie bei einem Überfahren des Rohbleches 20 durch das Bearbeitungsprodukt 21 zu befürchten wäre, kann auf diese Art und Weise vermieden werden.

**Figur 3**: Die mit dem Bearbeitungsprodukt 21 beladene Arbeitspalette 19 wird mittels eines Kettentriebes an der unteren zwischenlagerseitigen Palettenführung 14 auf die mittlere lagerseitige Palettenführung 10 aufgeschoben. Der Entnahmerechen des Entlademoduls 8 untergreift das bei der vorausgegangenen Blechbearbeitung als Bearbeitungsprodukt 21 angefallene Restgitter.

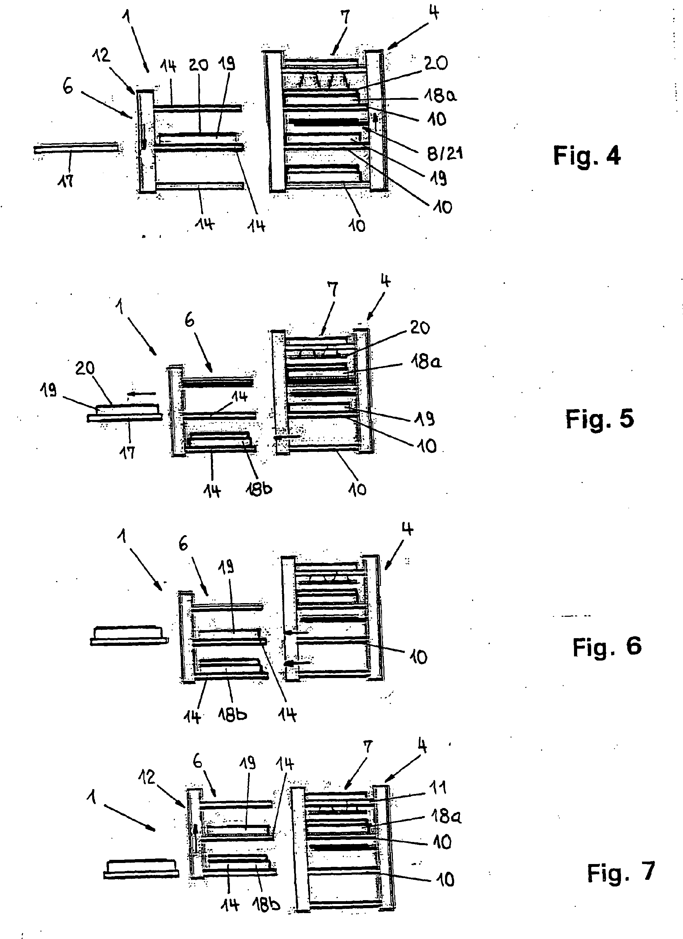

**Figur 4**: Nach dem Transfer der mit dem Bearbeitungsprodukt 21 beladenen Arbeitspalette 19 von dem Palettenlift 6 in das Lager 4 wird der Liftrahmen 12 des Palettenliftes 6 um das Abstandsmaß 16 abgesenkt. Infolgedessen kommt die mittlere zwischenlagerseitige Palettenführung 14 mit der daran gelagerten und mit einem Rohblech 20 beladenen Arbeitspalette 19 auf Höhe der Palettenführung 17 der Blechbearbeitungsmaschine 2 zu liegen. Gleichzeitig sind bei abgesenktem Liftrahmen 12 die untere lagerseitige Palettenführung 10 und die untere zwischenlagerseitige Palettenführung 14 sowie die obere lagerseitige Palettenführung 10 und die obere zwischenlagerseitige Palettenführung 14 einander zugeordnet.

Vor und während der Absenkbewegung des Liftrahmens 12 wird dasjenige Rohblech 20, das in dem Stapel auf der an der oberen lagerseitigen Palettenführung 10 befindlichen Vorratspalette 18a zuoberst liegt mittels des in der Aufnahmeposition befindlichen Belademoduls 7 vereinzelt. Zu diesem Zweck werden die Sauger an dem Saugerrahmen des Belademoduls 7 durch Absenken des Saugerrahmens an der Oberfläche des betreffenden Rohbleches 20 angelegt. Durch Erzeugung eines Unterdrucks an den Saugern des Belademoduls 7 wird das Rohblech 20 angesaugt. Gleichzeitig wird mittels des Entnahmerechens des Entlademoduls 8 das Restgitter von der Arbeitspalette 19 an der mittleren lagerseitigen Palettenführung 10 von der Arbeitspalette 19 abgehoben.

**Figur 5**: Die an der mittleren zwischenlagerseitigen Palettenführung 14 des Palettenliftes 6 angeordnete Arbeitspalette 19 wird mit dem darauf abgelegten Rohblech 20 auf die Palettenführung 17 der Blechbearbeitungsmaschine 2 bewegt. Das in den Arbeitsbereich der Blechbearbeitungsmaschine 2 eingefahrene Rohblech 20 kann nun bearbeitet werden. Zeitgleich mit dem Einfahren der Arbeitspalette 19 in den Arbeitsbereich der Blechbearbeitungsmaschine 2 wird die auf der unteren lagerseitigen Palettenführung 10 gelagerte Sammelpalette 18b auf die untere zwischenlagerseitige Palettenführung 14 aufgeschoben. Das an der oberen lagerseitigen Palettenführung 10 von der dort befindlichen Vorratspalette 18a angesaugte Rohblech 20 ist inzwischen vereinzelt und wird von dem Belademodul 7 gehalten. Die Vereinzelung des Rohbleches 20 müsste allerdings erst dann abgeschlossen sein, wenn der Betriebszustand gemäß Figur 7 erreicht ist. Für die Blechvereinzelung steht dementsprechend ein verhältnismäßig langer Zeitraum zur Verfügung. Demzufolge bleibt insbesondere Zeit für eine Doppelblechdetektion oder für ein anderweitiges Prüfen oder Vermessen des vereinzelten Rohbleches 20.

**Figur 6**: Die an der mittleren lagerseitigen Palettenführung 10 angeordnete und von dem Restgitter entladene Arbeitspalette 19 wird auf die mittlere zwischenlagerseitige Palettenführung 14 aufgeschoben. Nachdem sich diese Arbeitspalette 19 ursprünglich (Figur 2) auf der unteren zwischenlagerseitigen Palettenführung 14 befand, ist sie nun auf der mittleren zwischenlagerseitigen Palettenführung 14 angelangt und hat folglich in dem Palettenlift 6 einen Ebenenwechsel vollzogen.

**Figur 7**: Der Liftrahmen 12 des Palettenliftes 6 wird angehoben. Damit gelangt die untere zwischenlagerseitige Palettenführung 14 mit der Sammelpalette 18b auf Höhe der mittleren lagerseitigen Palettenführung 10. Gleichzeitig ist nun die mittlere zwischenlagerseitige Palettenführung 14 mit der entladenen Arbeitspalette 19 der oberen lagerseitigen Palettenführung 10 zugeordnet und folglich für das Belademodul 7 zugänglich, dessen Modulführung 11 mit der oberen zwischenlagerseitigen Palettenführung 14 fluchtet.

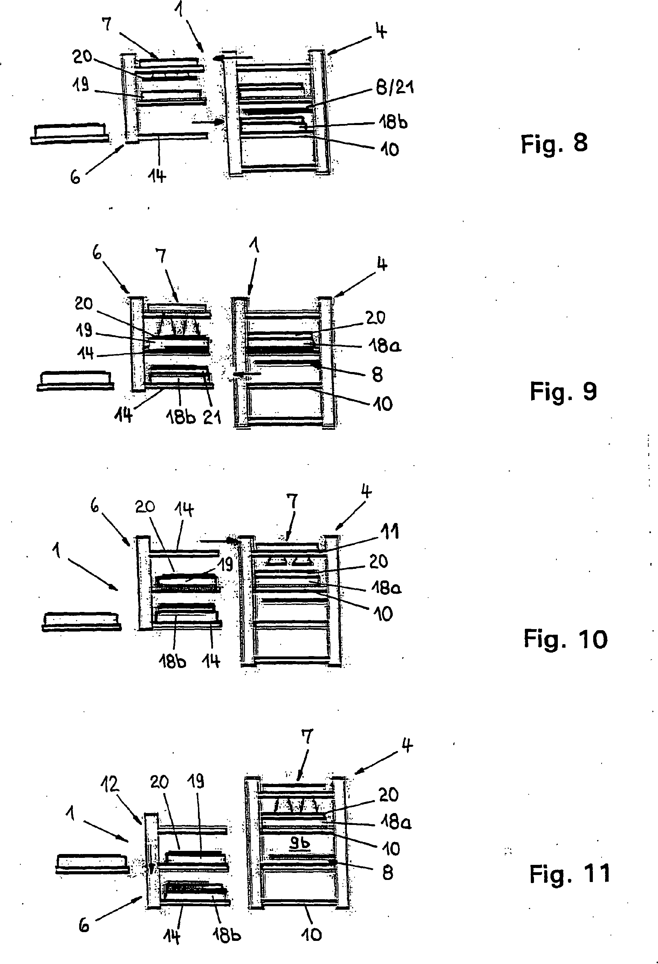

**Figur 8**: Das Belademodul 7 mit dem anhaftenden Rohblech 20 wird mittels des Kettentriebes an der oberen zwischenlagerseitigen Palettenführung 14 in den Palettenlift 6 und dort in seine Übergabeposition gezogen. Damit kommt das Belademodul 7 oberhalb der entladenen Arbeitspalette 19 zu liegen. Gleichzeitig wird die Sammelpalette 18b von der unteren zwischenlagerseitigen Palettenführung 14 auf die mittlere lagerseitige Palettenführung 10 geschoben, wo sie dann unterhalb des mittels des Entnahmerechens des Entlademoduls 8 angehobenen Restgitters bzw. Bearbeitungsproduktes 21 angeordnet ist. Durch Absenken des Entnahmerechens des Belademoduls 7 wird das Bearbeitungsprodukt 21 auf der Sammelpalette 18b abgelegt.

**Figur 9**: Das Belademodul 7 legt unter Absenken seines Saugerrahmens das an diesem anhaftende Rohblech 20 auf der an der mittleren zwischenlagerseitigen Palettenführung 14 angeordneten Arbeitspalette 19 ab. Gleichzeitig wird die mit den Bearbeitungsprodukten 21 beladene Sammelpalette 18b von der mittleren lagerseitigen Palettenführung 10 auf die untere zwischenlagerseitige Palettenführung 14 gezogen.

**Figur 10****:** Der Saugerrahmen des Belademoduls 7 wird angehoben und anschließend wird das Belademodul 7 von der oberen zwischenlagerseitigen Palettenführung 14 auf die Modulführung 11 des Lagers 4 zurückbewegt. Das Belademodul 7 liegt nun erneut in seiner Aufnahmeposition oberhalb der mit Rohblechen 20 beladenen Vorratspalette 18a, die ihrerseits an der oberen lagerseitigen Palettenführung 10 gelagert ist.

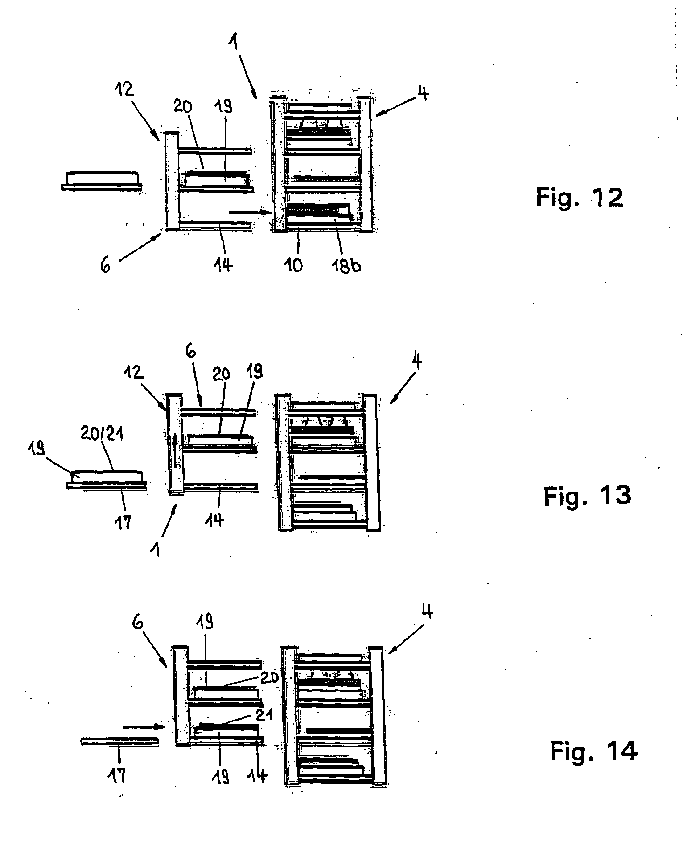

**Figur 11****:** Der Liftrahmen 12 des Palettenliftes 6 wird erneut abgesenkt. Die untere zwischenlagerseitige Palettenführung 14 mit der Sammelpalette 18b wird dadurch wieder der unteren lagerseitigen Palettenführung 10 zugeordnet. Gleichzeitig wird an der Vorratspalette 18a an der oberen lagerseitigen Palettenführung 10 durch Absenken des Saugerrahmens des Belademoduls 7 die nächste Rohblechvereinzelung eingeleitet. Die Rohblechvereinzelung kann sich zeitlich bis zum Erreichen des Funktionszustandes gemäß Figur 14 erstrecken. Bereits nach der zu Figur 9 beschriebenen Ausfahrbewegung der Sammelpalette 18b aus dem Lager 4 ist der Entnahmerechen des Entlademoduls 8 in dem Lagerfach 9b abgesenkt worden.

**Figur 12**: Bei abgesenktem Liftrahmen 12 wird die Sammelpalette 18b von der unteren zwischenlagerseitigen Palettenführung 14 zurück zu der unteren lagerseitigen Palettenführung 10 bewegt.

**Figur 13**: Der Liftrahmen 12 des Palettenliftes 6 wird erneut angehoben. Dadurch gelangt die nun wieder freie untere zwischenlagerseitige Palettenführung 14 auf Höhe der Palettenführung 17 der Blechbearbeitungsmaschine 2. An der mittleren zwischenlagerseitigen Palettenführung 14 befindet sich die Arbeitspalette 19 mit dem zu bearbeitendem Rohblech 20 in Wartestellung. Erst jetzt muss die Bearbeitung des Rohbleches 20 auf der in dem Arbeitsbereich der Blechbearbeitungsmaschine 2 befindlichen Arbeitspalette 19 spätestens abgeschlossen sein, d.h. spätestens jetzt ist anstelle des ursprünglichen Rohbleches 20 ein Bearbeitungsprodukt 21 auf der Arbeitspalette gelagert.

**Figur 14****:** Die nach Abschluss der Blechbearbeitung mit einem Bearbeitungsprodukt 21 beladene Arbeitspalette 19 wird von der Palettenführung 17 der Blechbearbeitungsmaschine 2 zu der unteren zwischenlagerseitigen Palettenführung 14 des Palettenliftes 6 bewegt. Die mit dem zu bearbeitenden Roblech 20 beladene Arbeitspalette 19 liegt wiederum oberhalb des Bearbeitungsproduktes 21. In der vorstehend beschriebenen Art und Weise kann nun erneut die mit dem Bearbeitungsprodukt 21 beladene Arbeitspalette 19 entladen (vgl. Figuren 3, 4) und die mit dem zu bearbeitenden Rohblech 20 beladene Arbeitspalette 19 in den Arbeitsbereich der Blechbearbeitungsmaschine 2 eingefahren werden (vgl. Figuren 4, 5).

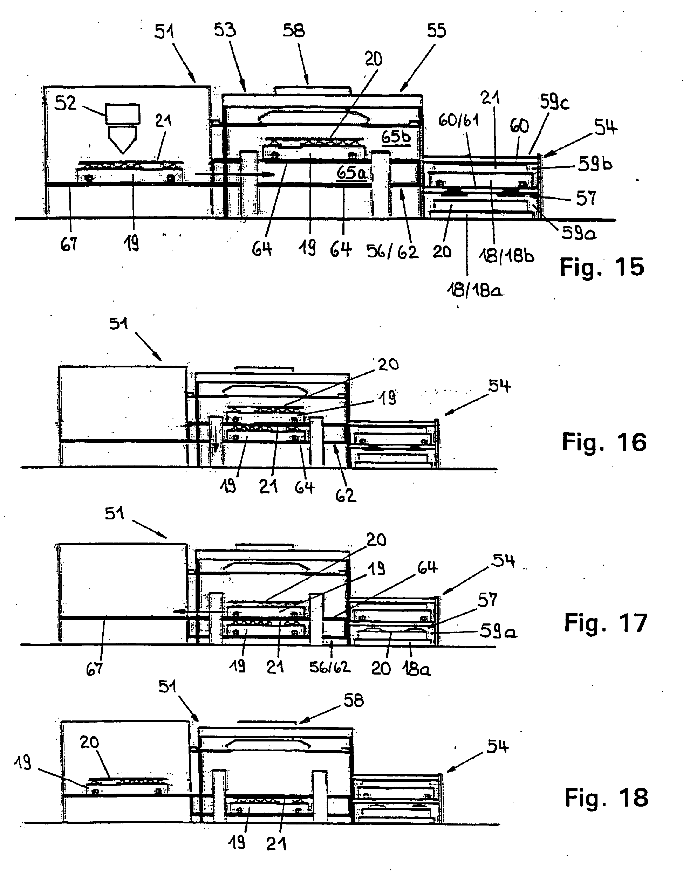

Gemäß den Figuren 15 bis 28 umfasst eine maschinelle Anordnung 51 eine gleichfalls nur in einer Darstellung angedeutete Blechbearbeitungsmaschine 52 sowie eine Beschickungseinrichtung 53. Bestandteile der Beschickungseinrichtung 53 sind ein Lager 54 sowie eine Umschlagvorrichtung 55. Ein als Palettenlift 56 ausgebildetes Zwischenlager der Umschlagvorrichtung 55 besitzt abweichend von den Verhältnissen gemäß den Figuren 1 bis 14 lediglich zwei übereinander angeordnete Zwischenlagerplätze 65a, 65b mit zwei zwischenlagerseitigen Palettenführungen 64. Ebenfalls abweichend von der maschinellen Anordnung 1 besitzt das Lager 54 der Beschickungseinrichtung 53 lediglich zwei übereinander angeordnete lagerseitige Palettenführungen 60. Die untere Palettenführung 60 fungiert gleichzeitig als Modulführung 61. An dem Lager 54 ergeben sich drei übereinander angeordnete Lagerplätze 59a, 59b, 59c. Schließlich unterscheidet sich die maschinelle Anordnung 51 von der maschinellen Anordnung 1 auch insofern, als an der maschinellen Anordnung 51 eine Entladeeinrichtung in Form eines Entlademoduls 58 oberhalb des Palettenliftes 56 angeordnet ist und ein als Beladeeinrichtung dienendes Belademodul 57 an der Unterseite einer Sammelpalette 18b angebracht ist. Im Übrigen stimmt die maschinelle Anordnung 51 gemäß den Figuren 15 bis 28 in ihrem grundsätzlichen Aufbau und in ihrer grundsätzlichen Funktionsweise mit der maschinellen Anordnung 1 gemäß den Figuren 1 bis 14 überein.

Auch der Werkstückwechsel zwischen dem Lager 54 und der Blechbearbeitungsmaschine 52 der maschinellen Anordnung 51 erfolgt in einem wiederkehrenden Zyklus, im Rahmen dessen mittels des in der Aufnahmeposition befindlichen Belademoduls 57 ein Rohblech 20 von einer als Vor-ratspalette 18a vorgesehenen Lagerpalette 18 aufgenommen und in einer Übergabeposition der Belademoduls 57 auf einer Arbeitspalette 19 abgelegt wird, die anschließend in den Arbeitsbereich der Blechbearbeitungsmaschine 52 verfährt. Nach der Werkstückbearbeitung wird die mit dem Bearbeitungsprodukt 21, d.h. mit einem Restgitter beladene Arbeitspalette 19 aus dem Arbeitsbereich der Blechbearbeitungsmaschine 52 herausbewegt, ehe die Arbeitspalette 19 mittels des Entlademoduls 58 entladen und das von der Arbeitspalette 19 abgehobene Bearbeitungsprodukt 21 an die als Sammelpalette 18b vorgesehene Lagerpalette 18 übergeben wird.

Auch die maschinelle Anordnung 51 ist derart konzipiert, dass unterschiedliche Einzelabläufe des Werkstückwechsels zeitlich parallelisiert werden können. Außerdem ist auch an der maschinellen Anordnung 51 sichergestellt, dass ein zu bearbeitendes Rohblech 20 nicht von einem Bearbeitungsprodukt 21 überfahren wird.

Im Einzelnen ist ein beispielhafter Werkstückwechsel an der maschinellen Anordnung 51 in den Figuren 15 bis 28 veranschaulicht. Hiervon abweichende Abläufe sind denkbar.

**Figur 15**: Ein Liftrahmen 62 des Palettenliftes 56 befindet sich in vertikaler Richtung in einer mittleren Stellung. Die untere zwischenlagerseitige Palettenführung 64 fluchtet in horizontaler Richtung mit einer Palettenführung 67 der Blechbearbeitungsmaschine 52. Lagerseitig sind die untere zwischenlagerseitige Palettenführung 64 der unteren lagerseitigen Palettenführung 60 und die obere zwischenlagerseitige Palettenführung 64 der oberen lagerseitigen Palettenführung 60 zugeordnet. An der oberen zwischenlagerseitigen Palettenführung 64 des Palettenliftes 56 befindet sich eine mit einem Rohblech 20 beladene Arbeitspalette 19 in einer Wartestellung. Die mit dem Belademodul 57 versehene Sammelpalette 18b ist auf die untere lagerseitige Palettenführung 60 aufgefahren. Die Vorratspalette 18a ist stationär an dem untere Lagerplatz 59a des Lagers 54 angeordnet. Das Entlademodul 58 befindet sich in seiner Ausgangsstellung oberhalb des Palettenliftes 56.

**Figur 16****:** Bei mittlerer Stellung des Liftrahmens 62 wird die mit dem Bearbeitungsprodukt 21 beladene Arbeitspalette 19 aus dem Arbeitsbereich der Blechbearbeitungsmaschine 52 auf die untere zwischenlagerseitige Palettenführung 64 bewegt. Die mit dem zu bearbeitendem Rohblech 20 beladene Arbeitspalette 19 liegt oberhalb der mit dem Bearbeitungsprodukt 21 beladenen Arbeitspalette 19.

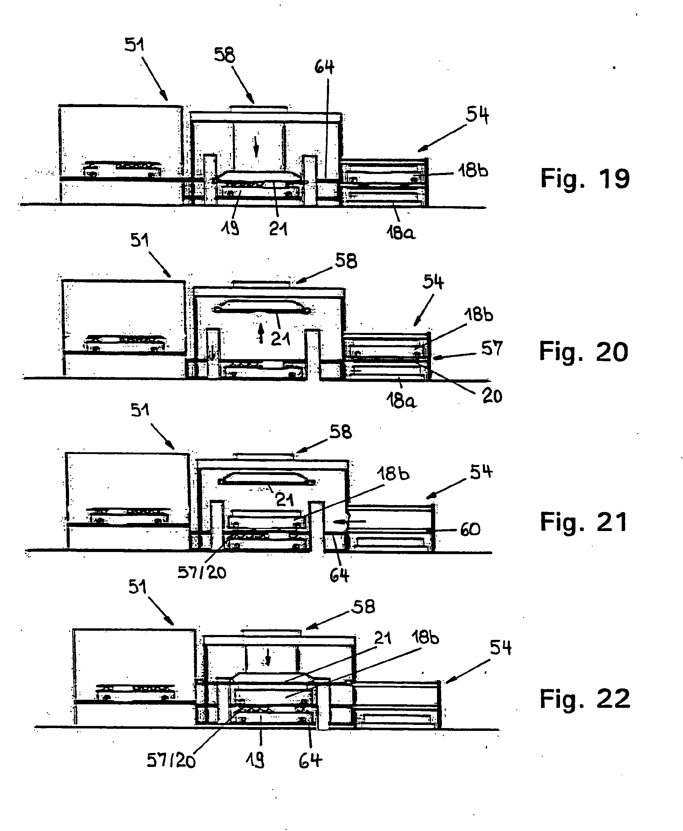

**Figur 17**: Der Liftrahmen 62 ist abgesenkt. Die obere zwischenlagerseitige Palettenführung 64 mit der darauf gelagerten und mit einem Rohblech 20 beladenen Arbeitspalette 19 liegt folglich auf Höhe der Palettenführung 67 der Blechbearbeitungsmaschine 52. Mit dem Absenken des Liftrahmens 62 wird gleichzeitig die mit dem Bearbeitungsprodukt 21 beladene Arbeitspalette 19 abgesenkt. Vor und während der Absenkbewegung des Liftrahmens 62 wird der Saugerrahmen des Belademoduls 57 an dem unteren Lagerplatz 59a des Lagers 54 zu dem dort gelagerten Rohblechstapel abgesenkt, um das in dem Stapel zuoberst liegende Rohblech 20 anzusaugen und zu vereinzeln. Der Vereinzelungsvorgang kann andauern, bis der Betriebszustand gemäß Figur 20 erreicht ist. Es steht damit ein Zeitraum zur Verfügung, binnen dessen beispielsweise auch eine Doppelblechdetektion und/oder ein anderweitiges Prüfung und Vermessen des vereinzelten Rohbleches 20 erfolgen kann.

**Figur 18**: Die mit dem zu bearbeitenden Rohblech 20 beladene Arbeitspalette 19 ist in den Arbeitsbereich der Blechbearbeitungsmaschine 52 eingefahren, wo sie während der Blechbearbeitung verbleibt. Die mit dem Bearbeitungsprodukt 21 beladene Arbeitspalette 19 ist für den Entnahmerechen des Entlademoduls 58 zugänglich.

**Figur 19**: Der Entnahmerechen des Entlademoduls 58 wird zu dem Bearbeitungsprodukt 21 auf der betreffenden Arbeitspalette 19 abgesenkt und bewegt sich dabei durch den senkrecht zu der Zeichenebene bestehenden Zwischenraum zwischen den Führungsschienen der oberen zwischenlagerseitigen Palettenführung 64 hindurch.

**Figur 20****:** Der Entnahmerechen des Entlademoduls 58 wird gemeinsam mit dem von dem Entnahmerechen erfassten Bearbeitungsprodukt 21 angehoben. Das Belademodul 57 hat ein Rohblech 20 vereinzelt. Der Saugerrahmen des Belademoduls 57 mit dem daran anhaftenden Rohblech 20 ist angehoben.

**Figur 21**: Die Sammelpalette 18b wird von der unteren lagerseitigen Palettenführung 60 auf die obere zwischenlagerseitige Palettenführung 64 bewegt. Die Sammelpalette 18b nimmt dabei das an ihrer Unterseite angebrachte Belademodul 57 mit dem daran anhaftenden Rohblech 20 mit.

**Figur 22**: Der Entnahmerechen des Entlademoduls 58 wird mit dem daran gehaltenen Bearbeitungsprodukt 21 abgesenkt. Das Bearbeitungsprodukt 21 wird durch Öffnen des Entnahmerechens auf der Sammelpalette 18b abgelegt. Gleichzeitig wird an der Unterseite der Sammelpalette 18b das Rohblech 20 von dem Belademodul 57 freigegeben und dadurch auf der an der unteren zwischenlagerseitigen Palettenführung 64 gelagerten Arbeitspalette 19 abgelegt.

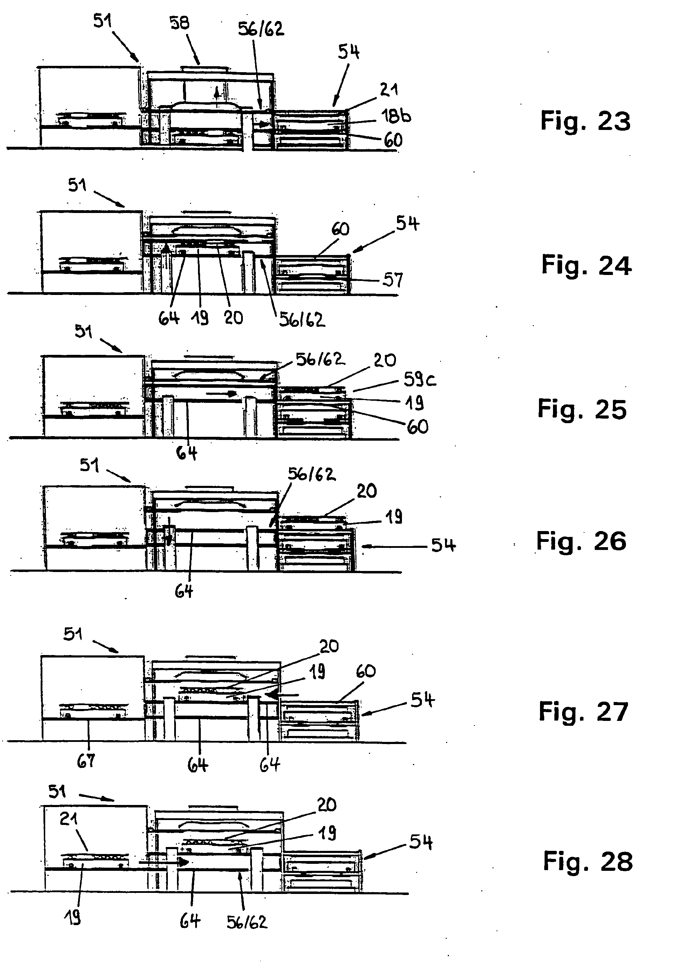

**Figur 23****:** Der Entnahmerechen des Entlademoduls 58 wird in seine Ausgangsposition angehoben. Die mit dem Bearbeitungsprodukt 21 beladene Sammelpalette 18b verfährt zurück auf die untere lagerseitige Palettenführung 60.

**Figur 24**: Der Liftrahmen 62 des Palettenliftes 56 wird in seine obere Stellung angehoben. Die untere zwischenlagerseitige Palettenführung 64 ist nunmehr der oberen lagerseitigen Palettenführung 60 zugeordnet. Auf der unteren zwischenlagerseitigen Palettenführung 64 ist nach wie vor die mit dem zu bearbeitenden Rohblech 20 beladene Arbeitspalette 19 gelagert. An dem Belademodul 57 wird eine weitere Rohblechvereinzelung eingeleitet.

**Figur 25****:** Die mit dem zu bearbeitenden Rohblech 20 beladene Arbeitspalette 19 wird von der unteren zwischenlagerseitigen Palettenführung 64 auf die obere lagerseitige Palettenführung 60 bewegt. An dem Lagerplatz 59c des Lagers 54 wird die mit dem zu bearbeitenden Rohblech 20 beladene Arbeitspalette 19 zwischengelagert, um an dem Palettenlift 56 einen Ebenenwechsel vollziehen zu können.

**Figur 26**: Der Liftrahmen 62 des nunmehr leeren Palettenliftes 56 wird in die mittlere Stellung abgesenkt. Dadurch kommt die obere zwischenlagerseitige Palettenführung 64 auf Höhe der oberen lagerseitigen Palettenführung 60 zu liegen.

**Figur 27**: Die mit dem zu bearbeitenden Rohblech 20 beladene Arbeitspalette 19 wird von der oberen lagerseitigen Palettenführung 60 auf die obere zwischenlagerseitige Palettenführung 64 bewegt. Dadurch wird von der mit dem zu bearbeitenden Rohblech 20 beladenen Arbeitspalette 19 an dem Palettenlift 56 ein Ebenenwechsel vollzogen. Das zu bearbeitende Rohblech 20 befindet sich nun in einer Wartestellung. Gleichzeitig fluchtet die leere untere zwischenlagerseitige Palettenführung 64 mit der Palettenführung 67 der Blechbearbeitungsmaschine 52.

**Figur 28****:** Nach Abschluss der Blechbearbeitung wird die mit dem Bearbeitungsprodukt 21, im gezeigten Beispielsfall einem Restgitter, beladene Arbeitspalette 19 aus dem Arbeitsbereich der Blechbearbeitungsmaschine 52 abgeführt und auf die untere zwischenlagerseitige Palettenführung 64 des Palettenliftes 56 bewegt. Damit kommt das Bearbeitungsprodukt 21 unterhalb des zu bearbeitenden Rohblechs 20 zu liegen.

In der vorstehend beschriebenen Art und Weise kann nun die mit dem zu bearbeitenden Rohblech 20 beladene Arbeitspalette 19 in den Arbeitsbereich der Blechbearbeitungsmaschine 52 bewegt und anschließend die mit dem Bearbeitungsprodukt 21 beladene Arbeitspalette 19 mittels des Entlademoduls 58 entladen werden. Nach dem Entladen des Bearbeitungsproduktes 21 wird die betreffende Arbeitspalette 19 erneut in der vorstehend beschriebenen Art und Weise mittels des an der Sammelpalette 18b angebrachten Belademoduls 57 mit einem zuvor vereinzelten Rohblech 20 beladen.

## Patentansprüche

1. Beschickungseinrichtung für eine maschinelle Anordnung (1) für die Blechbearbeitung, welche eine Blechbearbeitungsmaschine (2, 52) aufweist, an welcher ein auf einer Arbeitspalette (19) angeordnetes Blechwerkstück (20) bearbeitbar ist, **dadurch gekennzeichnet, dass** die Beschickungseinrichtung folgende Elemente umfasst:
● ein Lager (4, 54) für Lagerpaletten (18), mit mehreren Lagerplätzen (9a, 9b, 9c, 9d; 59a, 59b, 59c) sowie
● eine Umschlagvorrichtung (5, 55) für den Transfer eines zu bearbeitenden Blechwerkstückes (20) von einer als Vorratspalette (18a) vorgesehenen Lagerpalette (18) zu einer Arbeitspalette (19), welche der Blechbearbeitungsmaschine (2, 52) zugeführt wird sowie für den Transfer eines Bearbeitungsproduktes (21) der Blechbearbeitung von einer von der Blechbearbeitungsmaschine (2, 52) abgeführten Arbeitspalette (19) zu einer als Sammelpalette (18b) vorgesehenen Lagerpalette (18),
• wobei die Umschlagvorrichtung (5, 55) umfasst:
o ein Zwischenlager (6, 56) mit mehreren Zwischenlagerplätzen (15a, 15b, 15c; 65a, 65b) für Arbeitspaletten (19), welche der Blechbearbeitungsmaschine (2, 52) zuzuführen sind sowie für Arbeitspaletten (19), welche von der Blechbearbeitungsmaschine (2, 52) abgeführt worden sind,
o eine Beladeeinrichtung (7, 57) zum Transfer von zu bearbeitenden Blechwerkstücken (20) von einer Vorratspalette (18a) zu einer der Blechbearbeitungsmaschine (2, 52) zuzuführenden Arbeitspalette (19), wobei die Beladeeinrichtung (7, 57) in Funktionsstellungen in Form einer Aufnahmeposition sowie einer Übergabeposition bewegbar ist und zu bearbeitende Blechwerkstücke (20) bei Aufnahmeposition der Beladeeinrichtung (7, 57) von einer Vorratspalette (18a) aufnehmbar und bei Übergabeposition der Beladeeinrichtung (7, 57) an eine Arbeitspalette (19) übergebbar sind,
o eine Entladeeinrichtung (8, 58) zum Transfer von Bearbeitungsprodukten (21) der Blechbearbeitung von einer von der Blechbearbeitungsmaschine (2, 52) abgeführten Arbeitspalette (19) zu einer Sammelpalette (18b),
● wobei das Zwischenlager (6, 56) als höhenverstellbarer Palettenlift ausgebildet ist, mit wenigstens zwei übereinander angeordneten Zwischenlagerplätzen (15a, 15b, 15c; 65a, 65b),
● wobei die Beladeeinrichtung (7, 57) von der Entladeeinrichtung (8, 58) entkoppelt in eine Funktionsstellung bewegbar ist, wobei die Beladeeinrichtung (7, 57) in eine Aufnahmeposition bewegbar ist, in welcher durch die Beladeeinrichtung (7, 57) zu bearbeitende Blechwerkstücke (20) von einer an einem Lagerplatz (9a, 9b, 9c, 9d; 59a, 59b, 59c) des Lagers (4, 54) angeordneten Vorratspalette (18a) aufnehmbar sind und
● wobei das Lager (4, 54) und das Zwischenlager (6, 56) jeweils wenigstens eine Führung (11, 61; 14, 64) für die Beladeeinrichtung (7, 57) aufweisen und eine lagerseitige Führung (11, 61) für die Beladeeinrichtung (7, 57) und eine zwischenlagerseitige Führung (14, 64) für die Beladeeinrichtung (7, 57) durch Höhenverstellung des das Zwischenlager (6, 56) ausbildenden Palettenlifts einander derart zuordenbar sind, dass die Beladeeinrichtung (7, 57) zwischen dem Lager (4, 54) und dem Zwischenlager (6, 56) bewegbar ist.

2. Beschickungseinrichtung nach Anspruch 1, **dadurch gekennzeichnet, dass** die Entladeeinrichtung (8, 58) an dem Zwischenlager (6, 56) angeordnet ist und dass ein Überführungsmittel vorgesehen ist, mittels derer der Entladeeinrichtung (8, 58) eine Sammelpalette (18b) zuführbar ist.

3. Beschickungseinrichtung nach einem der vorhergehenden Ansprüche, **dadurch gekennzeichnet, dass** die Entladeeinrichtung (8, 58) an dem Lager (4, 54) vorgesehen ist und dass ein Überführungsmittel vorgesehen ist, mittels derer der Entladeeinrichtung (8, 58) eine Arbeitspalette (19) zuführbar ist.

4. Beschickungseinrichtung nach einem der vorhergehenden Ansprüche, **dadurch gekennzeichnet, dass** das Lager (4 ,54) und das Zwischenlager (6, 56) jeweils wenigstens eine Palettenführung (10, 60; 14, 64) für eine Lagerpalette (18) und/oder für eine Arbeitspalette (19) aufweisen und dass eine lagerseitige Palettenführung (10, 60) und eine zwischenlagerseitige Palettenführung (14, 64) durch Höhenverstellung des das Zwischenlager (6, 56) ausbildenden Palettenlifts einander derart zuordenbar sind, dass eine Lagerpalette (18) und/oder eine Arbeitspalette (19) zwischen dem Lager (4, 54) und dem Zwischenlager (6, 56) bewegbar ist.

5. Beschickungseinrichtung nach einem der vorhergehenden Ansprüche, **dadurch gekennzeichnet, dass** eine lagerseitige Palettenführung (10, 60) und eine lagerseitige Führung (11, 61) für die Beladeeinrichtung (7, 57) und/oder dass eine zwischenlagerseitige Palettenführung (14, 64) und eine zwischenlagerseitige Führung (14, 64) für die Beladeeinrichtung (7, 57) baugleich sind.

6. Beschickungseinrichtung nach einem der vorhergehenden Ansprüche, **dadurch gekennzeichnet, dass** die Beladeeinrichtung (7, 57) mit Führungsmitteln versehen ist, die mit Führungsmitteln an einer Lagerpalette (18) und/oder mit Führungsmitteln an einer Arbeitspalette (19) baugleich sind.

7. Beschickungseinrichtung nach einem der vorhergehenden Ansprüche, **dadurch gekennzeichnet, dass** das Zwischenlager (6, 56) wenigstens eine Antriebseinrichtung, vorzugsweise einen Kettentrieb, für die Beladeeinrichtung (7, 57) und/oder für eine Lagerpalette (18) und/oder für eine Arbeitspalette (19) aufweist.

8. Beschickungseinrichtung nach einem der vorhergehenden Ansprüche, **dadurch gekennzeichnet, dass** zwischenlagerseitige Palettenführungen (14, 64) und/oder zwischenlagerseitige Führungen (14, 64) für die Beladeeinrichtung (7, 57) einerseits und/oder lagerseitige Palettenführungen (10, 60) und/oder lagerseitige Führungen (11, 61) für die Beladeeinrichtung (7, 57) andererseits Abstandsmaße (16) aufweisen, die mit dem jeweils anderen Abstandsmaß (16) übereinstimmen oder ein Vielfaches dessen betragen.

9. Beschickungseinrichtung nach einem der vorhergehenden Ansprüche, **dadurch gekennzeichnet, dass** die Beladeeinrichtung (7, 57) mit einer Lagerpalette (18) verbunden und vorzugsweise an deren Unterseite angebracht ist.

10. Maschinelle Anordnung (1, 51) für die Blechbearbeitung,
● mit einer Blechbearbeitungsmaschine (2, 52), an welcher ein auf einer Arbeitspalette (19) angeordnetes Blechwerkstück (20) bearbeitbar ist sowie
● mit einer Beschickungseinrichtung nach einem der vorhergehenden Ansprüche.

## Claims

1. A feeding device for a machine assembly (1) for processing sheet metal, which has a sheet metal processing machine (2, 52) on which a sheet metal workpiece (20) disposed on a work pallet (19) can be processed, **characterised in that** the feeding device comprises the following elements:
● a store (4, 54) for storage pallets (18), with a plurality of storage locations (9a, 9b, 9c, 9d; 59a, 59b, 59c), and
● a transfer apparatus (5, 55) for transferring a sheet metal workpiece (20) that is to be processed from a storage pallet (18) provided as a supply pallet (18a) to a work pallet (19) which is conveyed to the sheet metal processing machine (2, 52) and for transferring a processing product (21) of the sheet metal processing from a work pallet (19), conveyed away from the sheet metal processing machine (2, 52), to a storage pallet (18) provided as a collecting pallet (18b),
● wherein the transfer apparatus (5, 55) comprises:
o an intermediate store (6, 56) having a plurality of intermediate storage locations (15a, 15b, 15c; 65a, 65b) for work pallets (19) that are to be conveyed to the sheet metal processing machine (2, 52) and for work pallets (19) that have been conveyed away from the sheet metal processing machine (2, 52),
o a loading device (7, 57) for transferring sheet metal workpieces (20) that are to be processed from a supply pallet (18a) to a work pallet (19) that is to be conveyed to the sheet metal processing machine (2, 52), wherein the loading device (7, 57) is movable into functional positions in the form of a take-up position and a delivery position, and sheet metal workpieces (20) that are to be processed can be taken up from a supply pallet (18a) when the loading device (7, 57) is in the take-up position and can be delivered to a work pallet (19) when the loading device (7, 57) is in the delivery position,
o an unloading device (8, 58) for transferring processing products (21) of the sheet metal processing from a work pallet (19), conveyed away from the sheet metal processing machine (2, 52), to a collecting pallet (18a),
● wherein the intermediate store (6, 56) is constructed as a height-adjustable pallet lift, having at least two intermediate storage locations (15a, 15b, 15c; 65a, 65b) arranged one above another,
● wherein the loading device (7, 57) is movable into a functional position separately from the unloading device (8, 58), the loading device (7, 57) being movable into a take-up position in which sheet metal workpieces (20) that are to be processed can be taken up by the loading device (7, 57) from a supply pallet (18a) disposed at a storage location (9a, 9b, 9c, 9d; 59a, 59b, 59c) of the store (4, 54) and
● wherein the store (4, 54) and the intermediate store (6, 56) each have at least one guide (11, 61; 14, 64) for the loading device (7, 57) and, by adjusting the height of the pallet lift forming the intermediate store (6, 56), a store guide (11, 61) for the loading device (7, 57) and an intermediate store guide (14, 64) for the loading device (7, 57) can be associated with each other in such a manner that the loading device (7, 57) is movable between the store (4, 54) and the intermediate store (6, 56).

2. A feeding device according to claim 1, **characterised in that** the unloading device (8, 58) is disposed at the intermediate store (6, 56) and that a transfer means is provided by means of which a collecting pallet (18b) can be conveyed to the unloading device (8, 58).

3. A feeding device according to either of the preceding claims, **characterised in that** the unloading device (8, 58) is provided at the store (4, 54) and that a transfer means is provided by means of which a work pallet (19) can be conveyed to the unloading device (8, 58).

4. A feeding device according to any one of the preceding claims, **characterised in that** the store (4, 54) and the intermediate store (6, 56) each have at least one pallet guide (10, 60; 14, 64) for a storage pallet (18) and/or for a work pallet (19) and that, by adjusting the height of the pallet lift forming the intermediate store (6, 56), a store pallet guide (10, 60) and an intermediate store pallet guide (14, 64) can be associated with each other in such a manner that a storage pallet (18) and/or a work pallet (19) is/are movable between the store (4, 54) and the intermediate store (6, 56).

5. A feeding device according to any one of the preceding claims, **characterised in that** a store pallet guide (10, 60) and a store guide (11, 61) for the loading device (7, 57) and/or that an intermediate store pallet guide (14, 64) and an intermediate store guide (14, 64) for the loading device (7, 57) are identical in construction.

6. A feeding device according to any one of the preceding claims, **characterised in that** the loading device (7, 57) is provided with guide means which are identical in construction to guide means on a storage pallet (18) and/or to guide means on a work pallet (19).

7. A feeding device according to any one of the preceding claims, **characterised in that** the intermediate store (6, 56) has at least one drive device, preferably a chain drive, for the loading device (7, 57) and/or for a storage pallet (18) and/or for a work pallet (19).

8. A feeding device according to any one of the preceding claims, **characterised in that** intermediate store pallet guides (14, 64) and/or intermediate store guides (14, 64) for the loading device (7, 57) on the one hand and/or store pallet guides (10, 60) and/or store guides (11, 61) for the loading device (7, 57) on the other hand have spacing dimensions (16) that correspond to or are a multiple of the respective other spacing dimension (16).

9. A feeding device according to any one of the preceding claims, **characterised in that** the loading device (7, 57) is joined to a storage pallet (18) and preferably is mounted on the underside thereof.

10. A machine assembly (1, 51) for processing sheet metal,
● having a sheet metal processing machine (2, 52) on which a sheet metal workpiece (20) disposed on a work pallet (19) can be processed, and
● having a feeding device in accordance with any one of the preceding claims.

## Revendications

1. Dispositif d'alimentation pour un système mécanique (1) pour l'usinage de tôles qui présente une machine (2, 52) d'usinage de tôles sur laquelle peut être usinée une pièce de tôle (20) disposée sur une palette de travail (19), **caractérisé en ce que** le dispositif d'alimentation comprend les éléments suivants :
un magasin (4, 54) pour des palettes d'entreposage (18), avec plusieurs emplacements d'entreposage (9a, 9b, 9c, 9d ; 59a, 59b, 59c), et
un dispositif de transfert (5, 55) pour le transfert d'une pièce de tôle à usiner (20) d'une palette d'entreposage (18) prévue comme palette de réserve (18a) à une palette de travail (19) qui est apportée à la machine (2, 52) d'usinage de tôles, ainsi que pour le transfert d'un produit usiné (21) de l'usinage de tôles d'une palette de travail (19) évacuée de la machine (2, 52) d'usinage de tôles à une palette d'entreposage (18) prévue comme palette collectrice (18b),
sachant que le dispositif de transfert (5, 55) comprend :
- un magasin intermédiaire (6, 56) avec plusieurs emplacements d'entreposage intermédiaire (15a, 15b, 15c ; 65a, 65b) pour des palettes de travail (19) qui doivent être apportées à la machine (2, 52) d'usinage de tôles, ainsi que pour des palettes de travail (19) qui ont été évacuées de la machine (2, 52) d'usinage de tôles,
- un dispositif de chargement (7, 57) pour le transfert de pièces de tôle à usiner (20) d'une palette de réserve (18a) à une palette de travail (19) à apporter à la machine (2, 52) d'usinage de tôles, sachant que le dispositif de chargement (7, 57) peut être déplacé dans des positions fonctionnelles sous la forme d'une position de réception et d'une position de remise, et que des pièces de tôle à usiner (20) provenant d'une palette de réserve (18a) peuvent être reçues dans la position de réception du dispositif de chargement (7, 57), et peuvent être remises à une palette de travail (19) dans la position de remise du dispositif de chargement (7, 57),
- un dispositif de déchargement (8, 58) pour le transfert de produits usinés (21) de l'usinage de tôles d'une palette de travail (19) évacuée de la machine (2, 52) d'usinage de tôles à une palette collectrice (18b),
sachant que le magasin intermédiaire (6, 56) est réalisé sous forme d'élévateur de palettes verticalement mobile, avec au moins deux emplacements d'entreposage intermédiaire superposés (15a, 15b, 15c ; 65a, 65b),
sachant que le dispositif de chargement (7, 57) peut être déplacé désaccouplé du dispositif de déchargement (8, 58) dans une position fonctionnelle, sachant que le dispositif de chargement (7, 57) peut être déplacé dans une position de réception dans laquelle des pièces de tôle à usiner (20), provenant d'une palette de réserve (18a) disposée à un emplacement d'entreposage (9a, 9b, 9c, 9d ; 59a, 59b, 59c) du magasin (4, 54), peuvent être reçues par le dispositif de chargement (7, 57), et
sachant que le magasin (4, 54) et le magasin intermédiaire (6, 56) présentent respectivement au moins un guide (11, 61 ; 14, 64) pour le dispositif de chargement (7, 57), et qu'un guide (11, 61) côté magasin pour le dispositif de chargement (7, 57) et un guide (14, 64) côté magasin intermédiaire pour le dispositif de chargement (7, 57) peuvent, par déplacement vertical de l'élévateur de palettes constituant le magasin intermédiaire (6, 56), être mutuellement associés de telle sorte que le dispositif de chargement (7, 57) peut être déplacé entre le magasin (4, 54) et le magasin intermédiaire (6, 56).

2. Dispositif d'alimentation selon la revendication 1, **caractérisé en ce que** le dispositif de déchargement (8, 58) est disposé sur le magasin intermédiaire (6, 56), et **en ce qu'**il est prévu un moyen de transfert au moyen duquel une palette collectrice (18b) peut être apportée au dispositif de déchargement (8, 58).

3. Dispositif d'alimentation selon l'une des revendications précédentes, **caractérisé en ce que** le dispositif de déchargement (8, 58) est prévu sur le magasin (4, 54), et **en ce qu'**il est prévu un moyen de transfert au moyen duquel une palette de travail (19) peut être apportée au dispositif de déchargement (8, 58).

4. Dispositif d'alimentation selon l'une des revendications précédentes, **caractérisé en ce que** le magasin (4, 54) et le magasin intermédiaire (6, 56) présentent respectivement au moins un guide de palette (10, 60 ; 14, 64) pour une palette d'entreposage (18) et/ou pour une palette de travail (19), et **en ce qu'**un guide de palette (10,60) côté magasin et un guide de palette (14, 64) côté magasin intermédiaire peuvent, par déplacement vertical de l'élévateur de palettes constituant le magasin intermédiaire (6, 56), être mutuellement associés de telle sorte qu'une palette d'entreposage (18) et/ou une palette de travail (19) peuvent être déplacées entre le magasin (4, 54) et le magasin intermédiaire (6, 56).

5. Dispositif d'alimentation selon l'une des revendications précédentes, **caractérisé en ce qu'**un guide de palette (10, 60) côté magasin et un guide (11, 61) côté magasin pour le dispositif de chargement (7, 57) sont de construction identique, et/ou **en ce qu'**un guide de palette (14, 64) côté magasin intermédiaire et un guide (14, 64) côté magasin intermédiaire pour le dispositif de chargement (7, 57) sont de construction identique.

6. Dispositif d'alimentation selon l'une des revendications précédentes, **caractérisé en ce que** le dispositif de chargement (7, 57) est pourvu de moyens de guidage qui sont de construction identique avec des moyens de guidage sur une palette d'entreposage (18) et/ou avec des moyens de guidage sur une palette de travail (19).

7. Dispositif d'alimentation selon l'une des revendications précédentes, **caractérisé en ce que** le magasin intermédiaire (6, 56) présente au moins un dispositif d'entraînement, de préférence une transmission par chaîne, pour le dispositif de chargement (7, 57) et/ou pour une palette d'entreposage (18) et/ou pour une palette de travail (19).

8. Dispositif d'alimentation selon l'une des revendications précédentes, **caractérisé en ce que** des guides de palette (14, 64) côté magasin intermédiaire et/ou des guides (14, 64) côté magasin intermédiaire pour le dispositif de chargement (7, 57) d'une part, et/ou des guides de palette (10, 60) côté magasin et/ou des guides (11, 61) côté magasin pour le dispositif de chargement (7, 57) d'autre part, présentent des cotes d'espacement (16) qui sont égales à l'autre cote d'espacement respective (16) ou à un multiple de celle-ci.

9. Dispositif d'alimentation selon l'une des revendications précédentes, **caractérisé en ce que** le dispositif de chargement (7, 57) est relié à une palette d'entreposage (18), et de préférence installé sur le côté inférieur de celle-ci.

10. Système mécanique (1,51) pour l'usinage de tôles,
avec une machine (2, 52) d'usinage de tôles, sur laquelle peut être usinée une pièce de tôle (20) disposée sur une palette de travail (19), et
avec un dispositif d'alimentation selon l'une des revendications précédentes.
